# DEMANDE DE BREVET EUROPEEN

(11) **EP 0 683 387 A1**
(43) Date de publication de la demande: **22.11.1995**
(21) Numéro de dépôt: 95401070.8
(22) Date de dépôt: 09.05.1995
(51) Int. Cl.: G01N 21/05, G01N 35/08

(54) **Système d'analyse optique d'un échantillon de mélange réactionnel**

(30) Priorité: 11.05.1994 FR 9405837
(71) Demandeur: PASTEUR SANOFI DIAGNOSTICS, F-92430 Marnes La Coquette (FR)
(72) Inventeur: Riochet, Denis, F-92770 Bois Colombes (FR)
(74) Mandataire: Habasque, Etienne Joel Jean-François

(57) **Abrégé**

Ce système comportant une cellule d'analyse optique (1), munie d'une source lumineuse (2) et de moyens de mesure photo-électriques (3) disposés de part et d'autre d'une cuve optique à circulation (4) en matériau transparent d'un circuit fluidique comprenant une partie de raccordement (5) de la cuve à circulation à un organe de prélèvement et de rejet de l'échantillon (6) de mélange réactionnel à étudier et une pompe (7) d'aspiration et de refoulement de ce mélange dans et hors de cette cuve (4), est caractérisé en ce que la cuve à circulation (4) et la partie de raccordement se présentent sous la forme d'un tube dont une extrémité est associée à la pompe (7) et dont l'autre extrémité est raccordée directement à l'organe de prélèvement et en ce que les diamètres internes de la cuve (4) et de la partie de raccordement (5) sont identiques pour former un circuit fluidique continu.

## Description

La présente invention concerne un système d'analyse optique d'un échantillon de mélange réactionnel.

Plus particulièrement, la présente invention concerne un système d'analyse optique comportant une cellule d'analyse optique, munie d'une source lumineuse et de moyens de mesure photo-électriques disposés de part et d'autre d'une cuve à circulation en matériau transparent d'un circuit fluidique, comprenant une partie de raccordement de la cuve à circulation à un organe de prélèvement et de rejet de l'échantillon de mélange réactionnel à étudier et une pompe d'aspiration et de refoulement de ce mélange dans et hors de cette cuve.

Les systèmes d'analyse optique d'échantillons de mélange réactionnel sont bien connus dans l'état de la technique, par exemple en biologie médicale pour des analyses colorimétriques, néphélémétriques ou turbidimétriques.

On trouvera un exemple de réalisation d'un tel système dans le document US-A-2 797 149 qui décrit un appareil présentant une grande partie des caractéristiques mentionnées précédemment pour une étude de suspensions.

D'autres exemples de réalisation des systèmes d'analyse de ce type pourront être trouvés dans les documents FR-A-2 262 307, FR-A-2 125 000 et DE-A-20 35 915.

On trouvera encore d'autres exemples de réalisation de dispositifs d'analyse optique dans les documents US-A-4 398 894 et US-A-4 253 846.

Le document US-A-4 398 894 décrit un dispositif d'analyse optique comportant un circuit de circulation de fluide et des moyens d'analyse optique disposés de part et d'autre du circuit de circulation de fluide. Ce dispositif permet de déterminer un degré d'agglutination de particules dans un mélange mais nécessite un système de mesure spécifique. De plus, il ne permet pas d'assurer l'analyse d'un échantillon circulant dans le circuit de circulation à une vitesse relativement élevée.

Le document US-A-4 253 846 décrit un dispositif d'analyse d'échantillons circulant dans un conduit d'analyse, au moyen d'un système d'analyse optique et comprenant des organes disposés le long du conduit pour ajouter à chaque échantillon un réactif correspondant. Ce dispositif permet d'assurer la réaction entre différents réactifs et un échantillon à doser dans le conduit, mais comporte un circuit fluidique très complexe.

En outre, tous ces systèmes présentent un certain nombre d'inconvénients, car étant donné qu'ils sont utilisés pour réaliser en série des analyses d'échantillons de mélanges réactionnels différents, il existe des risques de contamination d'un échantillon par les autres et notamment par le précédent, dans la mesure où ceux-ci passent dans le même circuit fluidique.

Pour tenter de résoudre ces problèmes, on a proposé d'utiliser des moyens de nettoyage de ce circuit fluidique par exemple en faisant circuler dans celui-ci un fluide de nettoyage entre chaque échantillon, mais on a constaté qu'il subsiste des problèmes de contamination qui sont liés à la structure complexe de ce circuit fluidique.

Le but de l'invention est donc de résoudre ces problèmes en proposant un système d'analyse optique qui soit simple et fiable.

A cet effet, l'invention a pour objet un système d'analyse optique d'un échantillon de mélange réactionnel du type comportant une cellule d'analyse optique, munie d'une source lumineuse et de moyens de mesure photo-électriques disposés de part et d'autre d'une cuve optique à circulation en matériau transparent faisant partie d'un circuit fluidique comprenant une partie de raccordement de la cuve à circulation à un organe de prélèvement et de rejet de l'échantillon de mélange réactionnel à étudier et une pompe d'aspiration et de refoulement de ce mélange dans et hors de cette cuve, caractérisé en ce que la cuve à circulation et la partie de raccordement se présentent sous la forme d'un tube dont une extrémité est associée à une pompe d'aspiration et de refoulement et dont l'autre extrémité est raccordée directement à l'organe de prélèvement, les diamètres internes de la cuve et de la partie de raccordement étant identiques pour former un circuit fluidique continu, et en ce que la cuve à circulation, la partie de raccordement et l'organe de prélèvement sont constitués soit d'un cylindre unique effilé en son extrémité, soit de l'assemblage de différents tubes, dont un tuyau souple, de diamètres internes identiques. Dans ce deuxième cas, le tuyau souple est la partie de raccordement.

L'invention sera mieux comprise à la lecture de la description qui va suivre, concernant une application néphélémétrique, donnée uniquement à titre d'exemple et faite en se référant aux dessins annexés, sur lesquels :
- la Fig.1 représente un schéma synoptique illustrant la structure générale d'un système d'analyse optique selon l'invention, avec tuyau souple de raccordement ;
- la Fig.2 représente un schéma synoptique illustrant la structure d'une cellule d'analyse optique entrant dans la constitution d'un système d'analyse selon l'invention; et
- la Fig.3 représente une vue de face d'un diaphragme entrant dans la constitution d'un système d'analyse optique selon l'invention.

Ainsi qu'on peut le voir sur ces figures, un système selon l'invention d'analyse optique d'un échantillon de mélange réactionnel, comporte une cellule d'analyse optique désignée par la référence générale 1 sur ces figures, munie d'une source lumineuse 2 et de moyens de mesure photo-électriques 3 disposés de part et d'autre d'une cuve à circulation 4 en matériau transparent et constituant un élément d'un circuit fluidique.

Ce circuit fluidique comprend soit un tuyau souple 5 de raccordement de la cuve à circulation 4 à un organe 6 de prélèvement et de rejet de l'échantillon de mélange réactionnel soit un cylindre effilé à son extrémité, pour former l'organe de prélèvement 6 et une pompe 7 d'aspiration et de refoulement de ce mélange dans et hors de cette cuve.

Cette pompe 7 peut être reliée à la cuve à circulation par l'intermédiaire d'une vanne 8 également raccordée à une source de fluide de nettoyage 9 pour permettre comme cela sera décrit plus en détail par la suite, d'injecter du fluide de nettoyage dans le circuit fluidique lors du refoulement du mélange réactionnel hors de celui-ci afin de nettoyer ce circuit.

L'organe de prélèvement et de rejet 6 peut par exemple être constitué par une aiguille adaptée à l'extrémité correspondante du tuyau de raccordement souple 5, celui-ci étant fixé par exemple sur un bras 10 d'un manipulateur 11, permettant de déplacer cette aiguille en regard de récipients de réaction, tels que des petits tubes ou puits de plaque de microtitration, par exemple 12, disposés sur un organe de réception quelconque et dans lesquels sont disposés différents mélanges réactionnels à analyser.

On conçoit alors que lors de l'analyse, le bras 10 du manipulateur 11 place l'organe 6 de prélèvement et de rejet de l'échantillon dans l'un des récipients 12 pour permettre à la pompe 7 d'aspirer un échantillon de mélange réactionnel contenu dans ce récipient dans le circuit fluidique afin de le faire entrer dans la cuve à circulation 4 et permettre son analyse optique.

Une fois cette analyse réalisée, le bras 10 du manipulateur 11 déplace l'organe 6 de prélèvement et de rejet de l'échantillon par exemple en regard d'un organe de vidange quelconque de cet échantillon et la pompe 7 est commandée pour provoquer un refoulement de cet échantillon du circuit fluidique.

Dans le même temps, la vanne 8 peut être pilotée pour permettre l'injection dans ce circuit fluidique, de fluide de nettoyage pour nettoyer celui-ci et éliminer toute trace de l'échantillon.

Selon l'invention et comme on peut le voir sur ces figures, la cuve à circulation peut se présenter sous la forme d'un tube 4 par exemple en verre, dont une extrémité est associée à la pompe 7 et dont l'autre extrémité est raccordée par exemple par collage, soudage ou pression, à l'extrémité correspondante du tuyau souple 5 de raccordement et les diamètres internes du tube formant cuve et du tuyau souple de raccordement sont identiques pour former un circuit fluidique continu, afin de faciliter le nettoyage de celui-ci et éviter tout problème de contamination des échantillons les uns par les autres ou par le liquide de nettoyage.

Sous le terme "identiques" on entend des diamètres dont la grandeur peut être strictement égale ou différer de l'ordre de 10%.

Selon une variante de l'invention, les diamètres internes du tube formant cuve 4 et du tuyau de raccordement 5 sont identiques au niveau de leur jonction, mais par la suite, il est possible d'envisager une diminution graduelle et continue du diamètre interne du tuyau de raccordement 5 et ceci jusqu'à une diminution de l'ordre de 50%, de préférence jusqu'à une diminution de 25%.

Il va de soi bien entendu, que ce système d'analyse peut également fonctionner comme un système à segmentation par air dans lequel une certaine quantité d'air est aspirée dans le circuit fluidique avant l'échantillon de mélange réactionnel.

Selon un mode de réalisation, les diamètres internes du tube et du tuyau peuvent avantageusement être voisins de 2 mm et la vitesse de circulation du mélange réactionnel dans le tube lors de la phase de prélèvement, peut par exemple être égale à 55 mm par seconde, ce qui assure notamment un écoulement régulier dans le cas d'un système à segmentation par air.

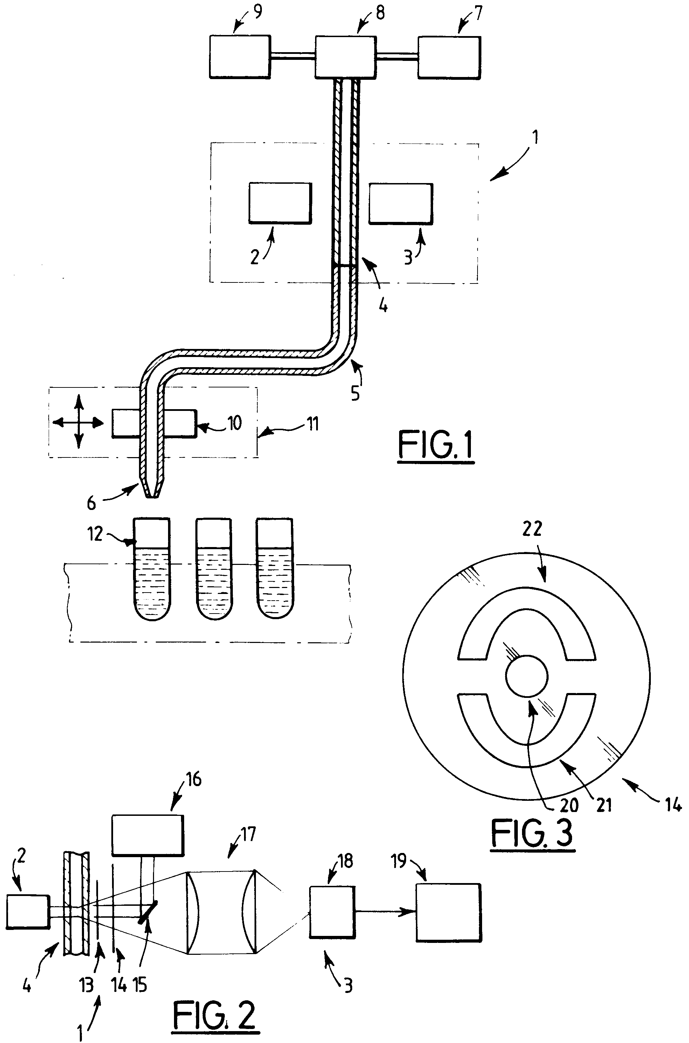

Comme on peut le voir sur la figure 2, la source lumineuse 2 peut en fait comporter une diode laser disposée d'un côté de ce tube 4.

De l'autre côté de ce tube sont disposés de façon classique, une fenêtre 13, un diaphragme 14, un miroir de renvoi 15, des moyens de piègeage de lumière 16, un système de lentilles 17, une cellule de mesure photo-électrique 18 et des moyens de traitement 19 des signaux de sortie de cette cellule de mesure photo-électrique.

Un exemple de réalisation du diaphragme 14 particulièrement utile pour une mesure néphélémétrique est représenté sur la figure 3.

Ce diaphragme est interposé entre le tube 4 et la cellule de mesure photo-électrique, et peut comporter un trou central 20 en regard duquel est placé le miroir de déviation 15 pour dévier le faisceau lumineux passant à travers ce trou en direction des moyens de piégeage 16 pour éliminer ce faisceau de lumière directe.

Ce diaphragme doit également comporter au moins deux lumières 21,22 symétriques par rapport à l'axe de ce diaphragme et adaptées pour laisser passer des faisceaux de la lumière déviée par les particules en suspension lors de son passage dans le tube, en direction de la cellule de mesure photo-électrique.

De préférence, ce diaphragme est agencé pour laisser passer les faisceaux de lumière dispersée dans un angle compris entre 8 à 16° par rapport à l'axe optique de la diode laser.

Afin d'améliorer la précision des mesures sur les mélanges réactionnels contenant des particules en suspension, résultant par exemple d'une agglutination, on préfère faire plusieurs mesures successives, de 50 à 200 par seconde, sur le fluide en mouvement dans le tube de mesure, ce qui permet à l'aide des moyens de traitement 19 des signaux de sortie de la cellule de mesure par exemple d'éliminer les valeurs aberrantes et de calculer une moyenne des signaux mesurés pour obtenir une valeur unique considérée comme étant le signal correspondant à l'échantillon analysé.

Enfin, on notera que les moyens de traitement 19 peuvent comporter n'importe quel calculateur approprié, permettant également de piloter les différents éléments décrits précédemment.

## Revendications

1. Système d'analyse optique d'un échantillon de mélange réactionnel du type comportant une cellule d'analyse optique (1), munie d'une source lumineuse (2) et de moyens photo-électriques (3) disposés de part et d'autre d'une cuve optique à circulation (4) en matériau transparent d'un circuit fluidique, comprenant une partie de raccordement (5) de la cuve à circulation à un organe de prélèvement et de rejet de l'échantillon (6) de mélange réactionnel à étudier et une pompe (7) d'aspiration et de refoulement de ce mélange dans et hors de cette cuve (4), caractérisé en ce que la cuve à circulation (4) et la partie de raccordement (5) se présentent sous la forme d'un tube dont une extrémité est associée à la pompe (7) d'aspiration et refoulement et dont l'autre extrémité est raccordée directement à l'organe de prélèvement, les diamètres internes de la cuve (4) et de la partie de raccordement (5) étant identiques pour former un circuit fluidique continu et en ce que la cuve à circulation (4), la partie de raccordement (5) et l'organe de prélèvement (6) sont constitués soit par un cylindre unique effilé à son extrémité, soit de l'assemblage de différents tubes (4,5,6) dont un tuyau souple (5) de diamètres internes identiques.

2. Système selon la revendication 1, caractérisé en ce que les diamètres internes de la cuve optique et de la partie de raccordement sont de l'ordre de 2 mm.

3. Système selon l'une des revendications 1 et 2, caractérisé en ce que la vitesse de circulation de l'échantillon dans la cuve optique lors de la mesure est de l'ordre de 55 mm par seconde.

4. Système selon l'une quelconque des revendications précédentes, caractérisé en ce que la pompe (7) est associée à des moyens (8,9) d'injection dans le circuit fluidique, d'un fluide de nettoyage de celui-ci lors du rejet de l'échantillon de mélange réactionnel.

5. Système selon l'une quelconque des revendications précédentes, caractérisé en ce que la source lumineuse (2) comporte une diode laser.

6. Système selon l'une quelconque des revendications précédentes, caractérisé en ce qu'un diaphragme (14) est interposé entre la cuve (4) et le reste des moyens photo-électriques.

7. Système selon la revendication 6, caractérisé en ce que, pour une mesure néphélémétrique, le diaphragme (14) comporte un trou central (20) en regard duquel est placé un miroir (15) de déviation du faisceau lumineux passant à travers ce trou en direction de moyens de piégeage (16) de celui-ci, et au moins deux lumières (21,22) symétriques par rapport à l'axe du diaphragme (14) et adaptées pour laisser passer des faisceaux de lumière déviée lors de son passage dans la cuve, en direction du reste des moyens photo-électriques.

8. Système selon l'une quelconque des revendications précédentes, caractérisé en ce que l'on effectue de 50 à 200 mesures optiques par seconde, lors de la mesure.

9. Système selon l'une quelconque des revendications précédentes, caractérisé en ce que les moyens photo-électriques comportent une cellule de mesure photo-électrique (18) dont la sortie est reliée à des moyens de traitement (19).
